# EUROPÄISCHE PATENTSCHRIFT

(11) **EP 1 561 655 B1**
(45) Veröffentlichungstag und Bekanntmachung des Hinweises auf die Patenterteilung: **11.03.2009**
(21) Anmeldenummer: 04106496.5
(22) Anmeldetag: 13.12.2004
(51) Int. Cl.: B60S 1/24

(54) **Antriebsvorrichtung für eine Scheibenwischanlage**
Driving device for a windscreen wiper system
Dispositif d'entraînement pour un système d'essuie-glace

(30) Priorität: 06.02.2004 DE 102004006014
(43) Veröffentlichungstag der Anmeldung: 10.08.2005
(73) Patentinhaber: ROBERT BOSCH GMBH, 70442 Stuttgart (DE)
(72) Erfinder: Heinrich, Laurent, 67400 Illkirch-Graffenstaden (FR)

(56) Entgegenhaltungen:
- GB-A- 1 470 576
- GB-A- 2 165 912

## Beschreibung

Die vorliegende Erfindung betrifft eine Vorrichtung zum Antrieb wenigstens eines Wischerarms einer Scheibenwischanlage gemäß Oberbegriff des Anspruchs 1.

### Stand der Technik

Antriebsvorrichtungen für Wischerarme von Scheibenwischanlagen sind in den unterschiedlichsten Ausführungsformen bekannt. Bekannte Antriebsvorrichtung für Scheibenwischanlagen weisen einen elektrischen Antriebsmotor auf, der eine Drehrichtungsumkehr an den jeweiligen Endlagen der Wischerarme aufweist. Eine derartige Antriebsvorrichtung ist beispielsweise in der DE 38 14 546 A1 beschrieben. Für die Drehrichtungsumkehr des Antriebsmotors ist jedoch eine relativ exakte Ermittlung der jeweiligen Endlagen notwendig, damit das vorgegebene Wischfeld auf der zu reinigenden Scheibe von den Wischerarmen überstrichen und nicht überschritten wird. Aus diesem Grund werden als elektrische Antriebsmotoren oftmals auch sog. Rundläufermotoren eingesetzt, die keine Drehrichtungsumkehr aufweisen. Bei einem derartigen Antrieb ist jedoch für eine Umsetzung der Drehbewegung des Antriebsmotors in eine Pendelbewegung eines Wischerarms oder mehrerer Wischerarme ein Getriebe notwendig. Als Getriebe eignet sich insbesondere ein Kurbeltrieb, das für eine Umsetzung einer Drehbewegung in eine lineare Schubbewegung bzw. in eine Pendelbewegung sorgen kann.

Bei bekannten Wischeranlagen mit einem Rundläuferantrieb, bei dem zwei oder drei Wischerarme weitgehend synchrone Pendelbewegungen ausführen und die mittels eines Rundläufermotors angetrieben werden, besteht oftmals das Problem, dass das Wischergestänge einen relativ großen Raumbedarf aufweist, um die Drehbewegung des Rundläufermotors über einen Kurbeltrieb in die notwendige Pendelbewegung der Wischerarme umzusetzen.

Eine Aufgabe der vorliegenden Erfindung besteht darin, eine gattungsgemäße Vorrichtung zum Antrieb wenigstens eines Wischerarms zur Verfügung zu stellen, das ein reduziertes Einbauvolumen aufweist.

Diese Aufgabe wird mit dem Gegenstand des unabhängigen Anspruchs gelöst. Merkmale vorteilhafter Weiterbildungen der Erfindung ergeben sich aus den anhängigen Ansprüchen.

Aus der GB-A-1470576 ist eine Vorrichtung gemäß dem Oberbegriff des Anspruchs 1 bekannt.

Vorteile der Erfindung

Eine Vorrichtung zum Antrieb wenigstens eines Wischerarms einer Scheibenwischanlage mit den Merkmalen des Oberbegriffs des Patentanspruchs 1 sieht gemäß der vorliegenden Erfindung vor, dass ein Kurbeltrieb zur Umsetzung einer Rotationsbewegung eines Antriebsmotors in eine Pendelbewegung des wenigstens einen Wischerarms eine Koppelstange und eine gelenkig mit dieser verbundene Antriebsstange umfasst, und dass die Antriebsstange eine wesentlich geringere Baulänge als die Koppelstange aufweist. Um dies realisieren zu können, ist die Antriebsstange in einem mittleren Bereich der Koppelstange gelenkig mit dieser verbunden. Auf diese Weise kann die Antriebsstange eine Baulänge aufweisen, die weniger als die Hälfte der Baulänge der Koppelstange beträgt, so dass das Einbauvolumen des gesamten Antriebsgestänges gegenüber herkömmlichen Anlagen wesentlich reduziert werden kann.

Als Antriebsmotor wird vorzugsweise ein elektrisch betriebener Rundläufermotor eingesetzt, dessen Abtriebswelle eine gleichmäßige - ggf. einstellbare bzw. steuerbare - Drehb ewegung liefert, die über den Kurbeltrieb der Antriebsvorrichtung in die Pendelbewegung des Wischerarms bzw. der Wischerarme umgesetzt wird. Der Einsatz eines Rundläufermotors hat den Vorteil, dass aufwändige Steuerungsmaßnahmen zur Drehrichtungsumkehr des Motors entfallen können. Es muss lediglich die Drehgeschwindigkeit des Motors vorgegeben werden. Die Realisierung der Pendelbewegungen inklusive der Definitionen der jeweiligen Endlagen der Wischerarme erfolgt ausschließlich über die Baulänge und die Anlenkpunkte des Wischergestänges sowie des Kurbeltriebes.

Eine Ausgestaltung der Erfindung sieht vor, dass die Antriebsstange gelenkig an einem mit einer Abtriebswelle des Antriebsmotors drehfest verbundenen ersten Kurbelstange angelenkt ist. Vorzugsweise ist die Koppelstange mit einem ersten Ende gelenkig an einem mit einer Antriebswelle des wenigstens einen Wischerarms drehfest verbundenen zweiten Kurbelstange angelenkt. Weiterhin kann vorgesehen sein, dass die Antriebsstange gekröpft ist und zumindest abschnittsweise innerhalb oder nahe einer Bewegungsebene der Koppelstange angeordnet ist. Auf diese Weise kann erreicht werden, dass das notwendige Bauvolumen für die Antriebsvorrichtung weitest gehend minimiert ist. Durch angepasste Kröpfungen der Koppelstange und/oder der Antriebsstange kann das erforderliche Einbauvolumen reduziert und an die vorhandenen Einbauverhältnisse, bspw. innerhalb einer Karosseriestruktur angepasst werden.

Die Koppelstange kann mit einem zweiten Ende gelenkig an einer mit einer zweiten Antriebswelle eines zweiten Wischerarms drehfest verbundenen dritten Kurbelstange angelenkt sein. Auf diese Weise sorgt die Koppelstange für die Synchronisation der Pendelbewegungen der beiden Wischerarme. Der Kurbeltrieb wird über die Verbindung der Antriebsstange mit der Koppelstange realisiert. Auf diese Weise beschreibt jeder Punkt der Koppelstange eine bogenförmige Pendelbewegung, während die Antriebsstange an ihrer Gelenkverbindung mit der Koppelstange eine bogenförmige Pendelbewegung und an ihrer Gelenkverbindung mit der ersten Kurbelstange des Antriebsmotors eine Kreisbewegung beschreibt. Auf diese Weise ist der gewünschte Kurbeltrieb realisiert.

Ggf. kann ein dritter Wischerarm mit einer dritten Antriebswelle vorhanden sein, der über die bereits vorhandene Koppelstange oder alternativ über eine zusätzliche Koppelstange mit dem Antrieb für die beiden anderen Wischerarm gekoppelt ist. Ein solcher dritter Wischerarm kann bspw. bei Nutzfahrzeugen sinnvoll sein, die eine relativ breite Windschutzscheibe aufweisen.

Die Koppelstange kann wahlweise eine gekrümmte oder eine gerade Kontur aufweisen. Auch die Antriebsstange kann beispielsweise gekrümmt oder S-förmig gebogen sein, um das Bauvolumen so weit wie möglich den Erfordernissen anzupassen bzw. es so weit wie möglich zu minimieren.

### Zeichnungen

Die Erfindung wird nachfolgend anhand eines bevorzugten Ausführungsbeispiels unter Bezugnahme auf die beiliegenden Zeichnungen näher erläutert. Dabei zeigen die:
- Figuren 1 und 2: jeweils schematische Perspektivdarstellungen einer erfindungsgemäßen Antriebsvorrichtung für zwei Wischerarme eines Kraftfahrzeugs, die
- Figur 3: eine schematische Perspektivdarstellung einer leicht abgewandelten Variante der Antriebsvorrichtung, die
- Figur 4: eine Ausführungsform einer Koppelstange der erfindungsgemäßen Antriebsvorrichtung, die
- Figuren 5 bis 7: schematische Einbaudarstellungen zur Verdeutlichung des reduzierten Bauvolumens der erfindungsgemäßen Antriebsvorrichtung und die
- Figur 8: eine weitere Einbaudarstellung in einer von der Figur 7 verschiedenen Perspektive.

### Beschreibung der Ausführungsbeispiele

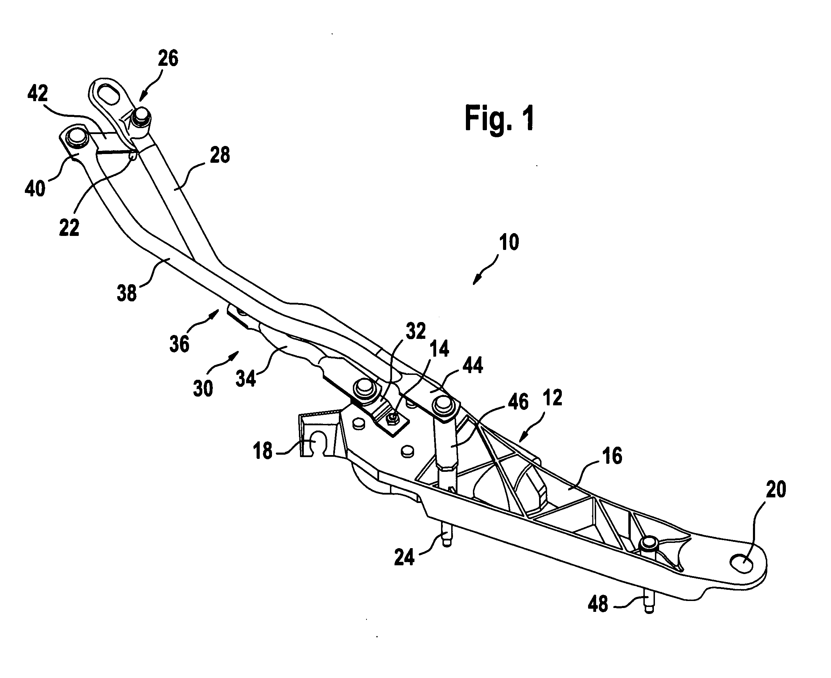

Die nachfolgende Beschreibung der erfindungsgemäßen Antriebsvorrichtung bezieht sich zunächst auf die Figuren 1 bis 3 gleichermaßen. Es werden lediglich einige wenige Unterschiede zwischen den Figuren gesondert erwähnt.

Eine erfindungsgemäße Antriebsvorrichtung 10 zum Antrieb zweier Wischerarme (nicht dargestellt) einer Scheibenwischanlage umfasst einen elektrischen Antriebsmotor 12, der als sogenannter Rundläufermotor weitgehend konstante Drehgeschwindigkeiten an einer Abtriebswelle 14 liefern kann. Der Antriebsmotor 12 ist in einem Sockelmodul 16 integriert, das über zwei oder mehr Befestigungspunkte 18, 20 an einer Fahrzeugkarosserie montierbar ist. Im gezeigten Ausführungsbeispiel ist das Sockelmodul 16 einstückig ausgebildet und kann bspw. aus einem Spritzgussbauteil aus Kunststoff oder Metall bestehen. Selbstverständlich kann das Sockelmodul auch mehrteilig ausgebildet sein und bspw. aus einem gebogenen Blech o. dgl. bestehen.

Die Antriebsvorrichtung 10 umfasst weiterhin zwei Antriebswellen 22, 24, auf die Wischerarme aufsteck- und befestigbar sind. Eine erste Antriebswelle 22 ist drehbar an einem freien Ende 26 eines am Sockelmodul 16 befestigten Auslegers 28 gelagert. Dieser stangenförmige bzw. stabförmige Ausleger 28 ist starr mit dem Sockelmodul 16 verbunden und definiert die räumliche Zuordnung des elektrischen Antriebsmotors 12 zur ersten Antriebswelle 22 bzw. der zweiten Antriebswelle 24 zur ersten Antriebswelle 22. Die zweite Antriebswelle 24 ist drehbar im Sockelmodul 16 gelagert.

Der Ausleger 28 kann eine gestreckte oder gekrümmte Kontur aufweisen, je nachdem welche Einbauverhältnisse im jeweiligen Kraftfahrzeug vorliegen. Als Ausleger 28 kann wahlweise auch eine U-fömige, eine L-förmige oder anderweitig versteifte Blechstange o. dgl. Verwendung finden.

Ein Kurbeltrieb 30 zur Umsetzung der Drehbewegung der Abtriebswelle 14 des Antriebsmotors 12 in eine Pendelbewegung der beiden Wischerarme umfasst eine erste Kurbelstange 32, die drehfest mit der Abtriebswelle 14 des Antriebsmotors verbunden ist und an der eine Antriebsstange 34 mit einem Ende drehbar gelagert ist. Das andere Ende der Antriebsstange 34 greift gelenkig an einem mittleren Bereich 36 einer Koppelstange 38 an, welche auf diese Weise in eine pendelnde Bewegung versetzt werden kann. Hierzu ist ein erstes Ende 40 der Koppelstange 38 gelenkig mit einer zweiten Kurbelstange 42 verbunden, die drehfest mit der ersten Antriebswelle 22 für den ersten Wischerarm (nicht dargestellt) verbunden ist. Das zweite Ende 44 der Koppelstande 38 ist gelenkig mit einer dritten Kurbelstange 46 verbunden, die drehfest mit der zweiten Antriebswelle 24 für den zweiten Wischerarm verbunden ist.

Die erste Kurbelstange 32, die zweite Kurbelstange 42 und die dritte Kurbelstange 46 sind jeweils als kurze Blechabschnitte ausgebildet. Im gezeigten Ausführungsbeispiel weisen die Kurbelstangen 32, 42 und 46 jeweils die gleiche Länge auf. Je nach Bedarf können sie jedoch auch unterschiedliche Längen aufweisen. Hierdurch können unterschiedliche Übersetzungen realisiert werden, was bspw. zur Erzielung unterschiedlicher Wischfelder für die beiden Wischerarm sinnvoll sein kann.

Eine weitere Achse bzw. Antriebswelle 48, die drehbar im Sockelmodul 16 gelagert sein kann und beabstandet von der zweiten Antriebswelle 24 angeordnet ist, kann zum Antrieb eines weiteren Wischerarms dienen. Derartige Antriebsvorrichtungen mit drei Wischerarmen werden beispielsweise bei Nutzfahrzeugen mit ihren relativ großen Scheibenflächen oder auch bei Bussen oder dergleichen eingesetzt. Um die weitere Antriebswelle 48 anzutreiben, müsste diese eine weitere Kurbelstange aufweisen, die beispielsweise mit der dritten Kurbelstange 46 über eine weitere Koppelstange (nicht dargestellt) gelenkig verbunden sein könnte. Auf diese Weise wäre auch die weitere Antriebswelle mit den ersten und zweiten Antriebswellen 22 und 24 gekoppelt und würde ebenso wie diese eine Pendelbewegung ausführen.

Wie anhand der Figuren 1 bis 3 bereits deutlich erkennbar wird, weist die Antriebsstange 34 eine im Vergleich zur Länge der Koppelstange 38 deutlich geringere Baulänge auf, so dass das erforderliche Einbauvolumen für die erfindungsgemäße Antriebsvorrichtung im Wesentlichen nicht vom Raumbedarf für die Antriebsstange 34 beeinflusst wird, sondern lediglich vom erforderlichen Raumbedarf für die Verlegung des Auslegers 28 sowie für die erforderliche Pendelbewegung der Koppelstange 38.

Die Figuren 1 bis 3 verdeutlichen eine Ausgestaltung der erfindungsgemäßen Antriebsvorrichtung 10, bei der sowohl der Ausleger 28, die Koppelstange 38 wie auch die Antriebsstange 34 jeweils eine gekrümmte Kontur aufweisen, die an die zur Verfügung stehenden Platzverhältnisse einer bestimmten Einbaulage angepasst sind.

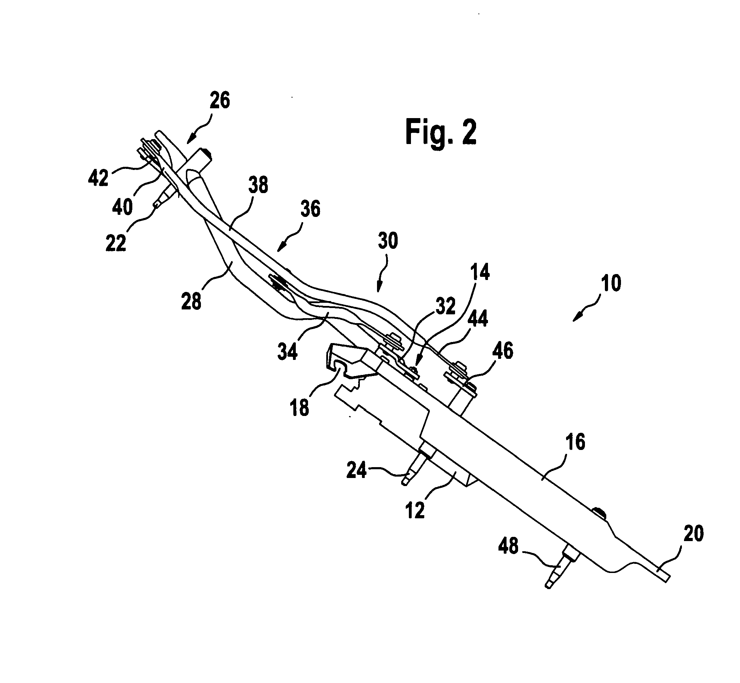

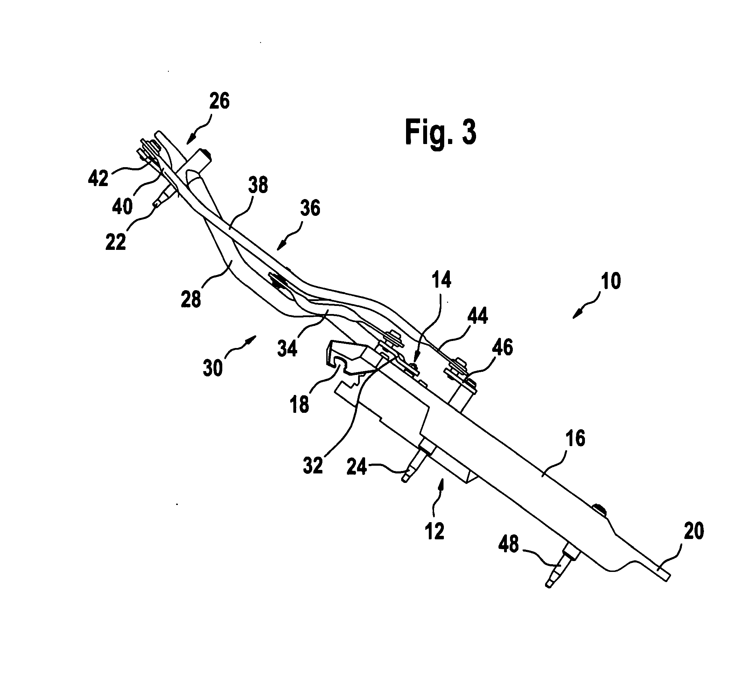

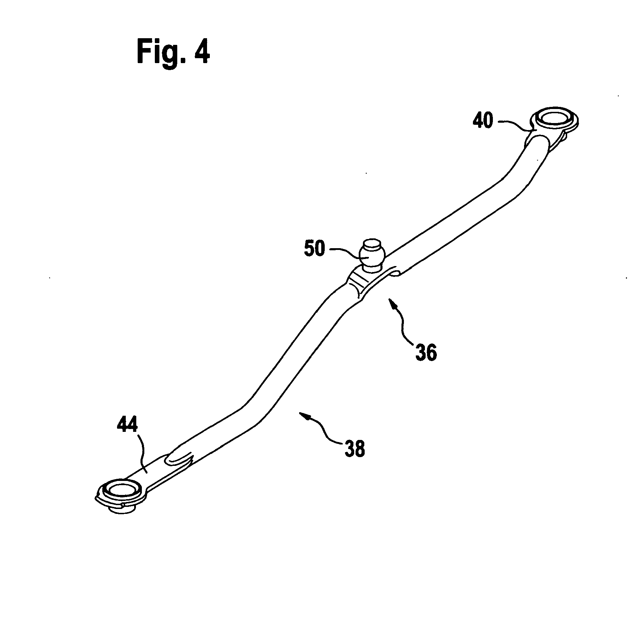

Die Koppelstange 38 kann entsprechend der Figuren 1 und 2 als einfaches Rohr mit abgeflachten Enden 40, 44 ausgebildet sein, das im mittleren Bereich 36 einen Gelenkzapfen bzw. eine angeschweißte Achse zur gelenkigen Verbindung mit der Antriebsstange 34 aufweist. Ggf. kann die Koppelstange 38 im mittleren Bereich 36 ebenfalls abgeflacht sein (vgl. Figuren 3 und 4), was zur Verringerung des Einbauvolumens sowie des notwendigen Platzbedarfs für die Pendelbewegung sinnvoll sein kann. Figur 4 verdeutlicht eine mögliche Ausgestaltung der Koppelstange 38, die an ihren beiden freien Enden 40 und 44 Lageraufnahmen zur Verbindung mit den Kurbelstangen 42 und 46 aufweist und die in ihrem mittleren Bereich 36 einen Gelenkzapfen 50 zur Verbindung mit dem Ende der Antriebsstange 34 aufweist. Die Kontur der Koppelstange 38 ist relativ frei wählbar und richtet sich in erster Linie nach den erforderlichen Einbauverhältnissen innerhalb der Karosseriestruktur.

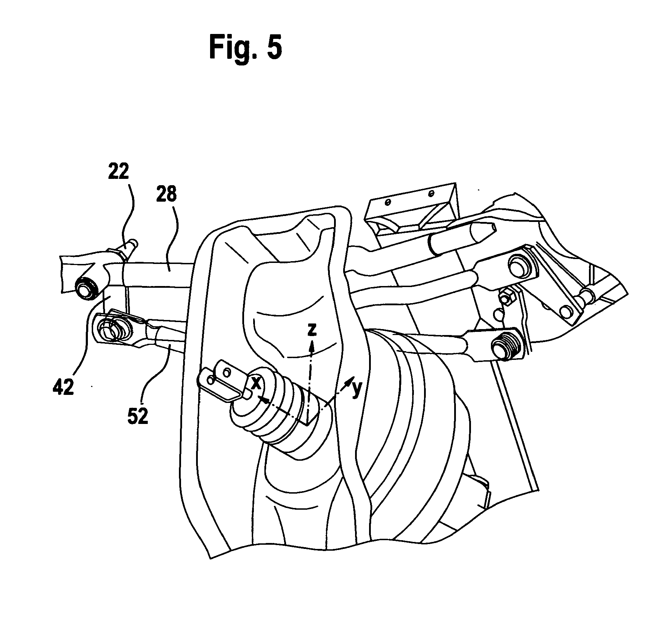

Anhand der perspektivischen Ansichten der Figuren 5 bis 7 werden die Vorteile der erfindungsgemäßen Antriebsvorrichtung 10 besonders deutlich. Figur 5 verdeutlicht eine Ausführungsform, die einen herkömmlichen Kurbeltrieb aufweist, bei dem eine relativ lange, herkömmliche Gelenkstange 52 an der zweiten Kurbelstange 42 der ersten Antriebswelle 22 angreift. Es wird hierbei deutlich, dass die Antriebsstange 52 nicht freigängig ist, sondern mit Teilen der Karosseriestruktur bzw. mit Komponenten des Fahrzeugs kollidiert. Die übrigen Komponenten in Figur 5 entsprechen denen der bereits beschriebenen Antriebsvorrichtung, so dass auf weitere Erläuterungen hierzu verzichtet werden kann.

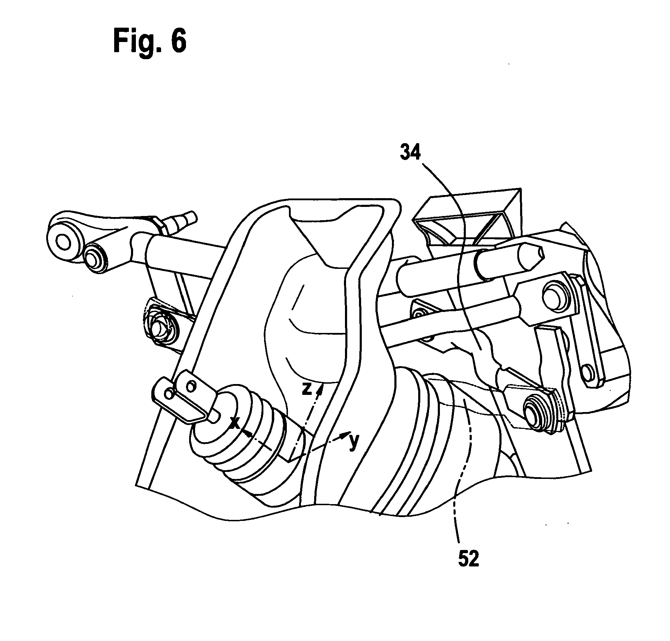

Figur 6 verdeutlicht in einer Gegenüberstellung die Verbesserung der erfindungsgemäßen Antriebsvorrichtung 10, bei der die herkömmliche Gelenkstange 52 durch die neue Antriebsstange 34 ersetzt wird. Zur besseren Veranschaulichung sind beide Komponenten eingezeichnet.

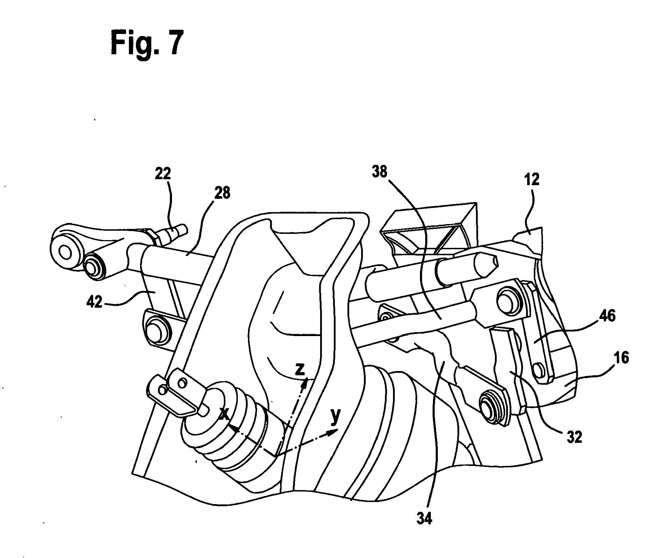

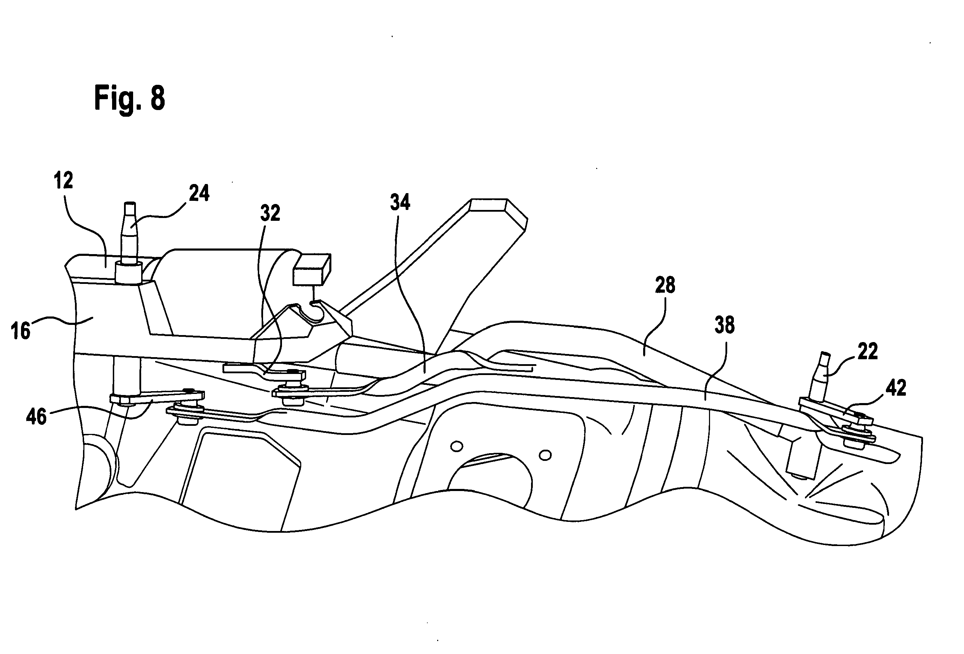

Die Figuren 7 und 8 zeigen verschiedene Ansichten der innerhalb der Karosseriestruktur montierten Antriebsvorrichtung 10. Deutlich erkennbar wird hierbei der nur geringe Raumbedarf für die Pendelbewegung der Kurbelstange 38 sowie für die Antriebsbewegung der Antriebsstange 34. Die sehr kurz ausgeführte Antriebsstange 34 benötigt keinen zusätzlichen Raum für ihre Drehbewegung bzw. Pendelbewegung. Auch die mehrfach gebogene Gestaltung des Auslegers 28 ist der vorhandenen Karosseriestruktur angepasst, so dass sich insgesamt eine äußerst kompakte Antriebsvorrichtung 10 für einen Scheibenwischerantrieb realisieren lässt, die einen einfach steuerbaren Rundläufermotor aufweist.

## Patentansprüche

1. Vorrichtung zum Antrieb wenigstens eines Wischerarms einer Scheibenwischanlage, mit einem Antriebsmotor, dessen Drehbewegung über einen Kurbeltrieb in eine pendelnde Schwenkbewegung des wenigstens einen Wischerarms umgesetzt wird, wobei der Kurbeltrieb (30) wenigstens eine Koppelstange (38) und eine gelenkig mit dieser verbundene Antriebsstange (34) umfasst, die eine wesentlich geringere Baulänge als die Koppelstange (38) aufweist, **dadurch gekennzeichnet, dass** die Antriebsstange (34) in einem mittleren Bereich (36) der Koppelstange (38) gelenkig mit dieser verbunden ist.

2. Vorrichtung nach Anspruch 1, **dadurch gekennzeichnet, dass** der Antriebsmotor (12) ein elektrischer Rundläufermotor ist.

3. Vorrichtung nach Anspruch 1 oder 2, **dadurch gekennzeichnet, dass** die Antriebsstange (34) gelenkig an einer mit einer Abtriebswelle (14) des Antriebsmotors (12) drehfest verbundenen ersten Kurbelstange (32) angelenkt ist.

4. Vorrichtung nach einem der voranstehenden Ansprüche, **dadurch gekennzeichnet, dass** die Koppelstange (38) mit einem ersten Ende (40) gelenkig an einer mit einer Antriebswelle (22, 24) des wenigstens einen Wischerarms drehfest verbundenen zweiten Kurbelstange (42) angelenkt ist.

5. Vorrichtung nach einem der voranstehenden Ansprüche, **dadurch gekennzeichnet, dass** die Antriebsstange (34) gekröpft ist und zumindest abschnittsweise innerhalb oder nahe einer Bewegungsebene der Koppelstange (38) angeordnet ist.

6. Vorrichtung nach einem der voranstehenden Ansprüche, **dadurch gekennzeichnet, dass** die Koppelstange (38) mit einem zweiten Ende (44) gelenkig an einer mit einer zweiten Antriebswelle (24) eines zweiten Wischarms drehfest verbunden dritten Kurbelstange (46) angelenkt ist.

7. Vorrichtung nach einem der voranstehenden Ansprüche, **dadurch gekennzeichnet, dass** jeder Punkt der Koppelstange (38) eine bogenförmige Pendelbewegung beschreibt.

8. Vorrichtung nach einem der voranstehenden Ansprüche, **dadurch gekennzeichnet, dass** die Antriebsstange (34) an ihrer Gelenkverbindung mit der Koppelstange (38) eine bogenförmige Pendelbewegung und an ihrer Gelenkverbindung mit der ersten Kurbelstange (32) eine Kreisbewegung beschreibt.

9. Vorrichtung nach einem der voranstehenden Ansprüche, **dadurch gekennzeichnet, dass** die Koppelstange (38) eine gekrümmte oder eine gerade Kontur aufweist.

## Claims

1. Device for driving at least one wiper arm of a windscreen wiper system, with a driving motor, the rotational movement of which is converted via a crank drive into an oscillating pivoting movement of the at least one wiper arm, wherein the crank drive (30) comprises at least one connecting rod (38) and a driving rod (34) which is connected to the latter in an articulated manner and has a substantially smaller overall length than the connecting rod (38), **characterized in that** the driving rod (34) is connected in an articulated manner to the connecting rod (38) in a central region (36) of the same.

2. Device according to Claim 1, **characterized in that** the driving motor (12) is an electric rotary motor.

3. Device according to Claim 1 or 2, **characterized in that** the driving rod (34) is coupled in an articulated manner to a first crank rod (32) which is connected in a rotationally fixed manner to an output shaft (14) of the driving motor (12).

4. Device according to one of the preceding claims, **characterized in that** the connecting rod (38) is coupled at a first end (40) in an articulated manner to a second crank rod (42) which is connected in a rotationally fixed manner to a driving shaft (22, 24) of the at least one wiper arm.

5. Device according to one of the preceding claims, **characterized in that** the driving rod (34) is bent and is arranged at least in some sections within or in the vicinity of a plane of movement of the connecting rod (38).

6. Device according to one of the preceding claims, **characterized in that** the connecting rod (38) is coupled at a second end (44) in an articulated manner to a third crank rod (46) which is connected in a rotationally fixed manner to a second driving shaft (24) of a second wiper arm.

7. Device according to one of the preceding claims, **characterized in that** each point of the connecting rod (38) describes a curved oscillating movement.

8. Device according to one of the preceding claims, **characterized in that** the driving rod (34) describes a curved oscillating movement at its articulated connection to the connecting rod (38) and describes a circular movement at its articulated connection to the first crank rod (32).

9. Device according to one of the preceding claims, **characterized in that** the connecting rod (38) has a curved or straight contour.

## Revendications

1. Dispositif pour entraîner au moins un bras d'essuie-glace d'un dispositif d'essuie-glace, avec un moteur d'entraînement, dont le mouvement rotatif est converti par l'intermédiaire d'une transmission à bielle en un mouvement pivotant oscillant de l'au moins un bras d'essuie-glace, la transmission à bielle (30) comprenant au moins une tige de couplage (38) et une tige d'entraînement (34) reliée de façon articulée avec cette dernière, qui présente une longueur hors tout nettement inférieure à celle de la tige de couplage (38), **caractérisé en ce que** dans une zone centrale (36) de la tige de couplage (38), la tige d'entraînement (34) est reliée de façon articulée avec cette dernière.

2. Dispositif selon la revendication 1, **caractérisé en ce que** le moteur d'entraînement (12) est un moteur électrique rotatif.

3. Dispositif selon la revendication 1 ou 2, **caractérisé en ce que** la tige d'entraînement (34) est articulée de façon mobile sur une première bielle motrice (32) reliée de façon solidaire en rotation avec un arbre de sortie (14) du moteur d'entraînement (12).

4. Dispositif selon l'une quelconque des revendications précédentes, **caractérisé en ce que** la tige de couplage (38) est articulée de façon mobile par une première extrémité (40) sur une deuxième bielle motrice (42) reliée de façon solidaire en rotation avec un arbre d'entraînement (22, 24) de l'au moins un bras d'essuie-glace.

5. Dispositif selon l'une quelconque des revendications précédentes, **caractérisé en ce que** la tige d'entraînement (34) est coudée et est disposée au moins par sections dans ou à proximité d'un plan de déplacement de la tige de couplage (38).

6. Dispositif selon l'une quelconque des revendications précédentes, **caractérisé en ce que** par une deuxième extrémité (44), la tige de couplage (38) est articulée de façon mobile sur une troisième bielle motrice (46) reliée de façon solidaire en rotation avec un deuxième arbre d'entraînement (24) d'un deuxième bras d'essuie-glace.

7. Dispositif selon l'une quelconque des revendications précédentes, **caractérisé en ce que** chaque point de la barre de couplage (38) décrit un mouvement oscillant en arc.

8. Dispositif selon l'une quelconque des revendications précédentes, **caractérisé en ce que** sur sa liaison articulée mobile, la tige d'entraînement (34) décrit avec la barre de couplage (38) un mouvement oscillant en arc et sur sa liaison articulée avec la première bielle motrice (32) un mouvement circulaire.

9. Dispositif selon l'une quelconque des revendications précédentes, **caractérisé en ce que** la tige de couplage (38) présente un contour curviligne ou rectiligne.
